## Europäisches Patentamt

## European Patent Office

## Office européen des brevets

(11) Veröffentlichungsnummer: **0 096 379**
**B1**

# EUROPÄISCHE PATENTSCHRIFT

(45) Veröffentlichungstag der Patentschrift:
**26.11.86**

(51) Int. Cl.⁴: **A 47 G 7/00**

(21) Anmeldenummer: **83105482.0**

(22) Anmeldetag: **03.06.83**

(54) Gesteckhalter.

(30) Priorität: **09.06.82 DE 3221714**

(43) Veröffentlichungstag der Anmeldung:
**21.12.83 Patentblatt 83/51**

(45) Bekanntmachung des Hinweises auf die Patenterteilung:
**26.11.86 Patentblatt 86/48**

(84) Benannte Vertragsstaaten:
**AT CH DE FR GB IT LI NL SE**

(56) Entgegenhaltungen:
**DE-A-2 103 354**
**DE-A-2 746 119**
**DE-U-1 963 048**
**DE-U-7 407 787**
**FR-A-2 161 306**

(73) Patentinhaber: **Smithers- Oasis W. Germany GmbH & Co. KG, Robert Bosch Strasse 2, D-6718 Grünstadt (DE)**

(72) Erfinder: **Röder, Manfred, Max- Beckmann- Strasse 18 a, D-6710 Frankenthal (DE)**

(74) Vertreter: **Fischer, Wolf- Dieter, Dipl.- Ing., Patentanwälte Dipl.- Ing. A.H. Fischer Dipl.- Ing. W.D. Fischer Kurfürstenstrasse 32, D-6700 Ludwigshafen/Rhein (DE)**

EP 0 096 379 B1

## Beschreibung

Die Erfindung betrifft einen Gesteckhalter zur Dekoration auf glatten Oberflächen mit einer einen Steckschaum-Körper aufweisenden Halterung, die an einem Befestigungsgehäuse angebracht ist, das an seinem Boden einen Gummisauger mit mittigem Zapfen aufweist, der in einem buchsenartigen Ansatz des Gehäuses geführt ist, und mit einem Betätigungsmechanismus zum Heben und Senken des Zapfens.

Es sind vorgefertigte Körbe aus verschiedenen Werkstoffen zur Aufnahme von Steckschaum-Körpern bekannt, wobei diese Körper zum Stecken von natürlichen und künstlichen Blumen, Zweigen, Früchten, Dekorationsmaterial oder dergleichen dienen. Das Anordnen derartiger Gesteckhalter ist immer dann problematisch, wenn die Befestigung auf einer nicht porösen, d.h. glatten, ebenen oder leicht gebogenen Fläche erfolgen soll. Solche glatten Flächen stellen beispielaweise die Oberflächen von Autos, Glas, Kunststoffplatten, Spiegel, keramische Platten oder metallische Flächen dar. Dazu hat man Gesteckhalter entwickelt, die an ihrem Boden einen Gummisauger besitzen, in dessen Mitte ein Zapfen angebracht ist, der einen Querstift trägt, dessen Enden seitlich vom Zapfen herausragen. Diese Enden stehen mit einer Auflaufschulter am Gehäuse in Kontakt, wobei durch Drehen des Befestigungsgehäuses gegenüber dem Gummisauger der Zapfen angehoben wird, so daß innerhalb des Saugers ein Vakuum erzeugt wird und der Gesteckhalter insgesamt fest an die glatte Unterlage gepreßt wird. Der wesentliche Nachteil dieser bekannten Einrichtung besteht darin, daß die Montage durch eine Drehbewegung erfolgen muß, wobei sich die Lage des Gesteckes beim Montieren nicht exakt festlegen läßt. Man muß durch mehrfaches Probieren die Ausgangsposition ermitteln. Weiterhin ist die Montage umständlich, da einmal der gesamte Halter gegen die glatte Oberfläche gepreßt werden muß und gleichzeitig die Drehbewegung auszuführen ist. Hierbei kann es auch zu Beschädigungen des Gesteckes kommen. Bekannt sind auch Gesteckhalter, insbesondere zum Anbringen an metallischen Oberflächen, die an ihrem Boden Magnetplatten aufweisen, in dem in eine Gummiplatte Eisen späne eingegossen sind. Auf diese Gummiplatte ist dann der Halter aufgenietet. Der wesentliche Nachteil besteht darin, daß der Halter auf der Oberfläche wandern kann, so daß ein zusätzliches Befestigen durch Binden notwendig iat. Durch das Wandern des Halters kann es zu Beschädigungen der Oberfläche kommen.

Der Erfindung liegt die Aufgabe zugrunde, einen derartigen Gesteckhalter so auszubilden, daß er auf derartigen Oberflächen einfach montiert und gegebenenfalls auch wieder abgenommen werden kann.

Diese Aufgabe wird nach der Erfindung dadurch gelöst, daß als Betätigungsmechanismus wenigstens eine seitlich am Befestigungsgehäuse herausragende Schubstange vorgesehen ist, die in einem Schlitz des Zapfens geführt ist und in Bewegungsrichtung des Zapfens eine schräg gegen das Schubstangenende ansteigende Fläche aufweist.

Eine vorteilhafte Ausführungsform besteht darin, daß zwei Schubstangen vorgesehen sind, die gegeneinander und parallel nebeneinander verschiebbar sind.

Es ist weiterhin vorteilhaft, daß die Enden der Stangen nach oben ragende Anschläge aufweisen.

Der Halter kann sicher und fest auf der glatten Oberfläche angebracht werden, wobei auch die Bedienung der Befestigungseinrichtung sehr einfach und auch sehr leicht zugänglich ist. Durch einfaches Auseianderziehen der Schubstangen, wobei zwei gegenläufig zu betätigemde Schubstangen vorteilhafter sind, erfolgt eine sichere Montage des Halters samt Dekoration. Ein Wandern auf der Oberfläche und damit auch ein Zerkretzen wird vermieden.

Die Erfindung wird in der nachfolgenden Beschreibung anhand eines in der Zeichnung dargestellten Ausfåhrungsbeispiels näher erläutert.

Es zeigen,

Figur 1 einen Schmitt durch einen derartigen Gesteckhalter und

Figur 2 eine Draufsicht auf Figur 1 bei abge nommenem Oberteil.

Der in der Zeichnung dargestellte Gesteckhalter weist einen Steckschaum-Körper 1 auf, der in der Regel in einer gitterförmigen Halterung 2 angeordnet ist, wobei dieser Körper 1, 2 an einem Befestigumgagehäuse 3 eingehängt ist. Dieses Befestigungsgehäuse 3 ist bei dem gezeigten Ausführungsbeispiel im Querschnitt kreisförmig ausgebildet, wobei jedoch auch eine viereckige oder sonstige mehreckige Gesteltung möglich ist. In der Mitte dieses Gehäuses 3 ist ein buchsenartiger Ansatz 4 vorhenden, der einen Schlitz 5 besitzt, wobei durch diesen Schlitz 5 zwei Schubstangen 6 verlaufen, die außerdem am Rand 7 des Befestitungsgehäuses 3 abgestützt sind.

Diese Schubstangen 6 besitzen an ihrem einen Ende Zugknöpfe 8 und weisen weiterhin gegen ihr anderes Ende zu eine schräg ansteigende Fläche 9 auf, wobei dann ein kurzes waagerechtes Stück anschließt mit einem Anschlag 10.

Innerhalb des buchsenartigen Ansatzes 4 ist ein Zapfen II angeordnet, der zum Boden des Befestigungsgehäuses 3 hin mit einem Gummisauger 12 versehen ist, wobei weiterhin in diesem Zapfen II ein Schlitz 13 vorgesehen ist, durch den die beiden Schubstangen 6 hindurchgesteckt sind. Die Höhe dieses Schlitzes 13 ist derart, daß der erhöhte Abschnitt 14 der Schubstangen 6 hindurchgeführt werden kann, während das Ende der Bewegung durch den/Anschlag 10 begrenzt ist.

## 0 096 379

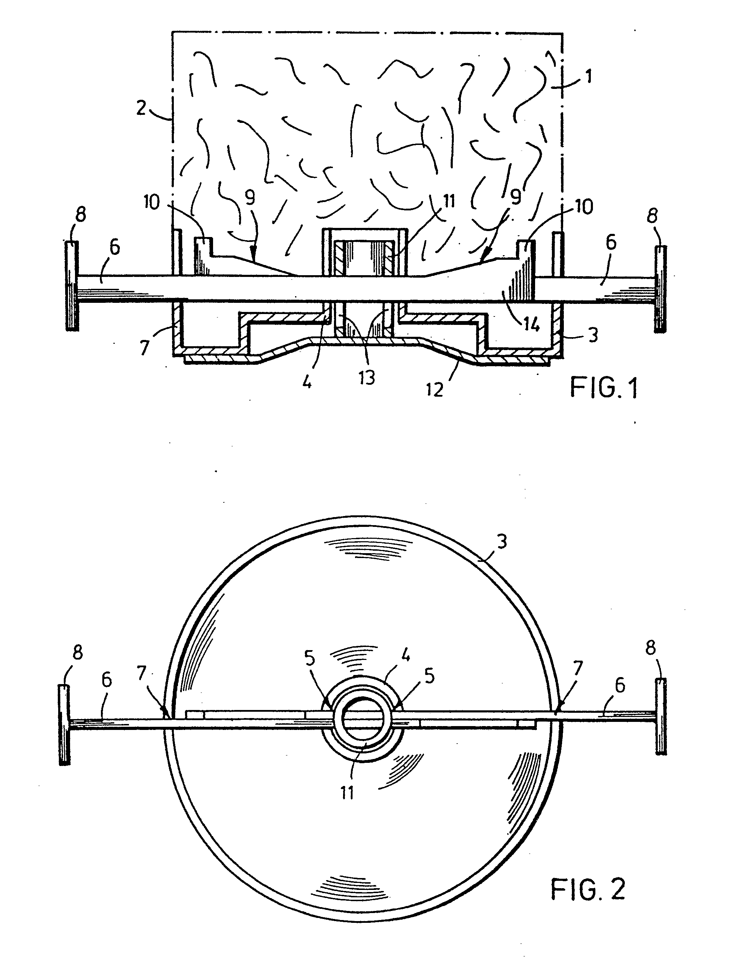

Die Befestigung des Gesteckhalters erfolgt euf einfache Art und Weise derart, daß sich die Schubstangen 6 zunächst in der Ausgangsstellung befinden (Figuren 1 und 2), wobei dann durch Herausziehen dieser Schubstangen der Zapfen II durch die schrägen Flächen 9 nach oben gedrückt wird, so daß am Gummisauger 12 ein Vakuum erzeugt wird.

### Patentansprüche

1) Gesteckhalter zur Dekoration auf glatten Oberflächen mit einer einen Steckschaum-Körper aufweisenden Halterung, die an einem Befestigungsgehäuse (3) angebracht ist, das an seinem Boden einen Gummisauger (12) mit mittigem Zapfen (11) aufweist, der in einem buchsenartigen Ansatz des Gehäuses geführt ist, und mit einem Betätigungsmechanismus zum Heben und Senken des Zapfens, dadurch gekennzeichnet, daß als Betätigungsmechanismus wenigstens eine seitlich am Befestigungsgehäuse (3) herausragende Schubstange (6) vorgesehen ist, die in einem Schlitz (13) des Zapfens (11) geführt ist und in Bewegungsrichtung des Zapfens (11) eine schräg gegen das Schubstangenende ansteigende Fläche (9) aufweist.

2) Gesteckhalter nach Anspruch 1, dadurch gekennzeichnet, daß zwei Schubstangen.(6) vorgesehen sind, die gegeneinander und parallel nebeneinander verschiebbar sind.

3) Gesteckhalter nach Anspruch 1 oder 2, dadurch gekennzeichnet, daß die Enden der Stangen (6) nach oben ragende Anschläge (10) aufweisen.

### Claims

1) Holder for cut flowers for the decoration on smooth surfaces with a support comprising a floral foam body which is fixed on a fixing housing (3) which comprises at its bottom a rubber sucker (12) with a central pin (11) that is guided in an adjoint piece in the form of a sleeve of the housing and an actuating mechanism for the lifting and the lowering of the pin, characterized in that as actuating mechanism at least one thrust rod (6) is provided that protudes laterally from the fixing housing (3) and this thrust rod is guided in a slot (13) of the pin (11) and which has in the direction of motion of the pin (11) a surface (9) which ascends obliquely towards the end of the thrust rod.

2) Holder for cut flowers as to claim 1, characterized in that two thrust rods (6) are provided which are movable against each other and parallel side by side.

3) Holder for cut flowers as to claim 1 or to, characterized in that the ends of the rods (6) have upwardly extending stops (10).

### Revendications

1.- Pique-fleurs pour la décoration de surfaces lisses, comportant un support comportant un corps pique-fleurs en mousse et fixé sur un boîtier de fixation (3), lequel comporte sur son fond une ventouse en caoutchouc (12) munie d'une tige centrale (11) guidée dans un prolongement en forme de manchon du boîtier, et un mécanisme d'actionnement pour lever et abaisser la tige, caractérisé en ce qu'on prévoit comme mécanisme d'actionnement au moins une tige de poussée (6) saillant latéralement sur le boitier de fixation (3), laquelle est guidée dans une fente (13) de la tige (11) et comporte une surface (9) s'élevant en oblique vers l'extrémité de la tige de poussée, dans le sens de déplacement de la tige (11).

2.- Pique-fleurs selon la revendication 1, caractérisé en ce qu'on prévoit deux tiges de poussée (6) qui peuvent être déplacées l'une par rapport à l'autre et parallèlement l'une à l'autre.

3.- Pique-fleurs selon la revendication 1 ou 2, caractérisé en ce que les extrémités des tiges (6) comportent des butées (10) saillant vers le haut.

FIG. 1

FIG. 2